# EUROPÄISCHE PATENTSCHRIFT

(11) **EP 1 710 115 B1**
(45) Veröffentlichungstag und Bekanntmachung des Hinweises auf die Patenterteilung: **11.01.2017**
(21) Anmeldenummer: 06007010.9
(22) Anmeldetag: 01.04.2006
(51) Int. Cl.: B60L 11/18, H02M 7/538, H02M 7/5387

(54) **Schaltungsanordnung und Ansteuerverfahren für ein Elektro- oder Hybridfahrzeug mit zwei Gleichstromquellen**
Circuit arrangement and driving method for an electric or hybrid vehicle with two dc power supplies
Circuit et méthode de commande d'un véhicule électrique ou hybride avec deux sources d'alimentation continue

(30) Priorität: 08.04.2005 DE 102005016177
(43) Veröffentlichungstag der Anmeldung: 11.10.2006
(73) Patentinhaber: Semikron Elektronik GmbH & Co. KG Patentabteilung, 90431 Nürnberg (DE)
(72) Erfinder: Schreiber, Dejan, 90408 Nürnberg (DE)

(56) Entgegenhaltungen:
- EP-A- 0 573 065
- EP-A- 1 615 325
- US-B1- 6 642 683

## Beschreibung

Es wird eine Schaltungsanordnung und ein zugehöriges Ansteuerverfahren für ein Fahrzeug mit reinem Elektronantrieb, oder für ein Fahrzeug mit einem Hybridantrieb bestehend aus einem Elektro- und einem Verbrennungsmotor vorgestellt. Es wird ausschließlich die geeignete Kombination aus zwei Gleichstromquellen, mindestens einem Elektromotor und notwendiger Stromrichtertechnik beschrieben. Die Verbindung des Elektromotors und des Verbrennungsmotors zu einem Hybridantrieb wird hier nicht betrachtet.

Für derartige Fahrzeuge ist beispielhaft aus der DE 198 49 316 A1 und der EP 0 573 065 A2 eine Kombination aus einem Elektromotor mit einem zugeordneten Akkumulator, also einer Gleichstromquelle und -senke, mit einer Betriebsspannung von beispielhaft 300V bekannt. Weiterhin weist ein derartiges Antriebssystem einen zweiten Akkumulator mit einer Betriebsspannung von 12V oder 42V auf. Für den Fahrbetrieb mittels des Elektromotors wird hierbei allerdings als Energiespeicher ausschließlich der erste Akkumulator eingesetzt, weil die Betriebsspannung des zweiten zu gering ist.

Im Fahrbetrieb mittels des Elektromotors, unabhängig davon ob in einem Hybridantrieb noch ein Verbrennungsmotor parallel arbeitet, wird dieser Elektromotor aus dem ersten Akkumulator gespeist. Hierzu ist zwischen den Akkumulator und dem Elektromotor ein Stromrichter in Form eines 3- Phasen- Wechselrichters geschaltet. Im Bremsbetrieb arbeitet der Elektromotor als Generator zur Ladung des Akkumulators, wobei der Stromrichter als Gleichrichter betrieben wird. Ebenso kann während des Fahrbetriebs mittels Verbrennungsmotor der Elektromotor als Generator dienen und den Akkumulator mittels des Stromrichters laden, da hier die Energie für den Vortrieb ausschließlich aus dem Verbrennungsmotor bezogen wird. In all diesen Fällen kann der zweite Akkumulator zur Versorgung der notwendigen Steuergeräte dienen.

Bekannt ist ebenfalls, dass der erste Akkumulator durch eine Brennstoffzelle ersetzt werden kann. Diese wird mit Wasserstoff betrieben und dient als Energiequelle für den Elektromotor. Nachteilig hierbei ist, dass Bremsenergie nicht zurückgespeichert werden kann und somit ungenutzt bleibt.

Bekannt ist weiterhin, dass zwischen dem Akkumulator und dem Elektromotor ein Hochsetzsteller angeordnet werden kann, um bei gegebener Akkumulatorbetriebsspannung einen Elektromotor mit höherer Nennspannung zu betreiben.

Das Dokument EP 0 573 065 A2 offenbart eine Schaltungsanordnung für ein Elektro- oder Hybridfahrzeug mit mindestens einer Mehr-Phasen- Maschine einer ersten die Mehr-Phasen Maschine speisenden Gleichstromeinheit, die als Stromquelle und Stromsenke ausgebildet ist und einer zweiten, zur ersten unterschiedlich ausgestalteten, Gleichstromeinheit, die entweder ebenfalls als Stromquelle und -senke oder ausschließlich als Stromquelle ausgebildet ist und einer Anordnung von Leistungshalbleiterbauelementen, in zwei Stromrichtern, jeweils bestehend aus einer entsprechenden Anzahl Halbbrückenanordnungen von je zwei Halbleiterschaltern, deren jeweilige Wechselstromanschlüsse phasenrichtig miteinander und mit den Anschlüssen der Mehr- Phasen- Maschine verbunden sind, wobei der Anschluss erster Polarität der ersten Gleichstromeinheit über ein Stromventil mit dem ersten Anschluss des ersten Stromrichters verbunden ist.

Grundsätzlich ist es auch, beispielhaft aus der US 6,642,683 B1 bekannt, einen Motor zeitversetzt aus einer Mehrzahl von Quellen, hier beispielhaft einzelnen Drei- Phasen-Wechselrichtern zu speisen. Hierzu werden diese parallel mit dem Motor verbunden und geeignet angesteuert.

Der Erfindung liegt die Aufgabe zugrunde eine Schaltungsanordnung und ein zugehöriges Ansteuerverfahren für ein Elektro- oder Hybridfahrzeug mit mindestens einer Mehr- Phasen- Maschine einer ersten Gleichstromeinheit, die als Stromquelle und Stromsenke dient und einer zweiten Gleichstromeinheit, die entweder ebenfalls als Stromquelle und Stromsenke oder ausschließlich als Stromquelle dient vorzustellen, wobei die Mehr- Phasen- Maschine aus einer beliebigem Kombination der Gleichstromeinheiten gespeist werden kann, alle Stromsenken aus der Mehr- Phasen- Maschine gespeist werden können und eine Stromquelle alternativ oder gleichzeitig die Mehr- Phasen- Maschine und eine Stromsenke speisen kann und hierbei keine zusätzlichen Stromrichter, beispielsweise in Form von DC-DC-Wandlern zwischen den Gleichstromeinheiten notwendig sind.

Die Aufgabe wird erfindungsgemäß gelöst, durch die Maßnahmen der Merkmale der Ansprüche 1 und 8. Bevorzugte Ausführungsformen sind in den Unteransprüchen beschrieben.

Die Erfindung geht aus von einem Elektro- oder Hybridfahrzeug mit mindestens einer Mehr- Phasen- Maschine, vorzugsweise Drei- Phasen- Maschine, die entweder im Motor- oder im Generatorbetrieb arbeitet, abhängig von der Bewegungsart des Fahrzeugs und dem Energiemanagement einer übergeordneten Regelung. Diese Mehr- Phasen-Maschine wird in beliebiger Kombination aus zwei Gleichstromeinheiten gespeist. Die erste Gleichstromeinheit ist als Stromquelle und Stromsenke ausgebildet, vorzugsweise als Akkumulator. Die zweite Gleichstromeinheit ist ausgebildet als Stromquelle und Stromsenke, vorzugsweise als Akkumulator oder als Anordnung von Kondensatoren, oder ausschließlich als Stromquelle, vorzugsweise als Brennstoffzelle.

Die gesamte Schaltungsanordnung weist weiterhin eine Anordnung von Leistungshalbleiterbauelementen auf. Diese besteht aus zwei Stromrichtern, vorzugsweise zwei Drei- Phasen- Stromrichtern, wobei jeder wiederum aus einer entsprechenden Anzahl Halbbrückenanordnungen von je zwei Halbleiterschaltern besteht. Hierbei sind die jeweiligen Phasen der Wechselstromanschlüsse miteinander und phasenrichtig mit den Anschlüssen der Mehr- Phasen- Maschine verbunden.

Die Anschlüsse zweiter, vorzugsweise negativer, Polarität der beiden Gleichstromeinheiten und der beiden Stromrichter sind miteinander verbunden. Der Anschluss erster, vorzugsweise positiver, Polarität der ersten Gleichstromeinheit ist mittels eines ersten Stromventils mit dem ersten Anschluss des ersten Stromrichters verbunden, während der Anschluss erster Polarität der zweiten Gleichstromeinheit mittels eines zweiten Stromventils mit dem ersten Anschluss des zweiten Stromrichters verbunden ist.

Das Ansteuerverfahren der genannten Schaltungsanordnung umfasst mehrere Betriebszuständen, wie:
a) Fahrt mit Einsatz einer Energiequelle. Hierbei wird die Mehr- Phasen- Maschine im Motorbetrieb aus einer Gleichstromeinheit mittels des zugeordneten Stromrichtes gespeist.
b) Beschleunigung bei Einsatz beider Energiequellen. Hierbei wird die Mehr- Phasen-Maschine im Motorbetrieb quasigleichzeitig aus beiden Gleichstromeinheiten gespeist, indem eine erste Gleichstromeinheit mittels eines geöffneten TOP-Schalters einer ersten Halbbrückenanordnung und eines geöffneten BOT-Schalters einer beliebigen zweiten Halbbrückenanordnung des ersten Stromrichters den Motor für ein Zeitintervall antreibt. Im nächsten Zeitintervall, in dem auf Grund der Induktivität der Motorwicklungen der Freilaufstrom fließen würde, wird mittels eines geöffneten TOP- Schalters einer ersten Halbbrückenanordnung und eines geöffneten BOT- Schalters einer zweiten beliebigen Halbbrückenanordnung des zweiten Stromrichters der Motor aus der zweiten Gleichstromeinheit versorgt. Dieses Verfahren wird zyklisch für alle Halbbrückenanordnungen permutiert.
c) Bremsvorgang mit Energierückspeisung in mindesten eine Gleichstromeinheit. Hierbei speist die Mehr- Phasen- Maschine im Generatorbetrieb eine der beiden Gleichstromeinheiten mittels des zugeordneten Stromrichters im Gleichrichterbetrieb. Alternativ können in einem alternierenden Verfahren beide Gleichstromeinheiten mittels der ihnen zugeordneten Stromrichter gespeist werden, sofern beide Gleichstromeinheiten auch Stromsenken darstellen.
d) Umladevorgang zwischen den beiden Gleichstromeinheiten. Hierbei wird eine erste Gleichstromeinheit aus einer zweiten Gleichstromeinheit mit geringerer Ausgangsspannung als die erste gespeist indem ein, dem erster Stromrichter der ersten Gleichstromeinheit zugeordneter, TOP- Schalter und gleichzeitig ein mit diesem TOP- Schalter über eine Wicklung der Mehr- Phasen- Maschine verbundener und dem zweiten Stromrichter der zweiten Gleichstromeinheit zugeordneter BOT- Schalter geöffnet wird, wodurch ein Stromfluss beginnt. Anschließend wird der BOT- Schalter geschlossen, der Stromfluss bleibt aufgrund der Induktivität der Wicklung aufrechterhalten und zwangsläufig durch die Diode des dem BOT- Schalter zugeordneten TOP- Schalters fließt und lädt bei geöffnetem Stormventil die zweite Gleichstromeinheit. Ein Umladevorgang von der Gleichspannungseinheit höhere Spannung in diejenige niedrigerer Spannung ist ebenso möglich.

Der erfinderische Gedanke wird anhand der Ausführungsbeispiele der Fig. 1 bis 5 näher erläutert.
Fig. 1 zeigt eine erste symmetrisch ausgestaltete erfindungsgemäße Schaltungsanordnung für zwei gleichartige Gleichstromeinheiten.
Fig. 2 zeigt eine zweite erfindungsgemäße Schaltungsanordnung für zwei unterschiedlich ausgestaltete Gleichstromeinheiten.
Fig. 3 zeigt eine dritte erfindungsgemäße Schaltungsanordnung für zwei unterschiedlich ausgestaltete Gleichstromeinheiten.
Fig. 4 zeigt eine weitere erfindungsgemäße Schaltungsanordnung mit gemeinsamen BOT- Schaltern.
Fig. 5 zeigt einen Teil einer erfindungsgemäßen Schaltungsanordnung mit einem zusätzlichen Hochsetzsteller.

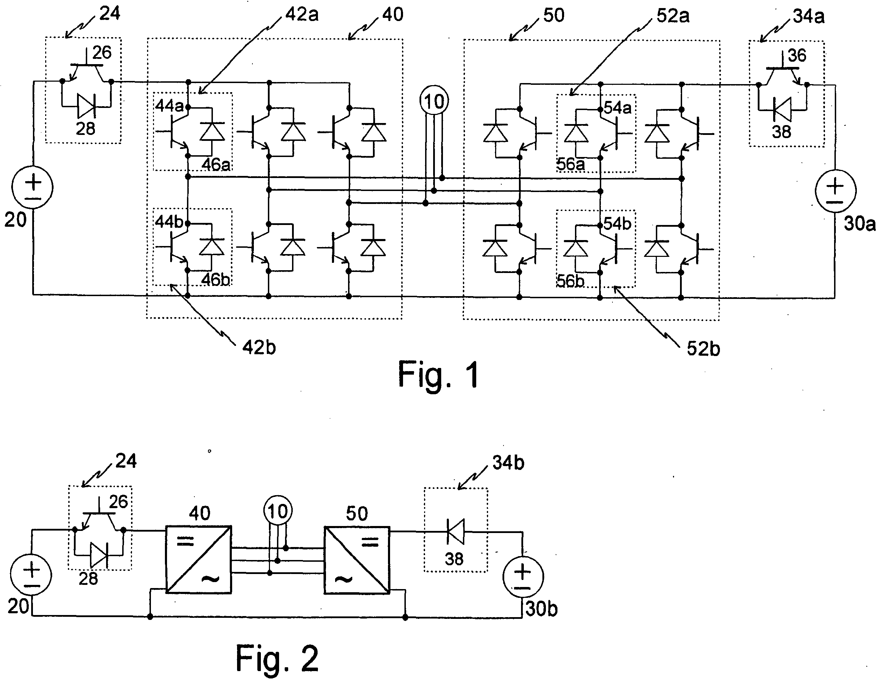

Fig. 1 zeigt eine erste symmetrisch ausgestaltete erfindungsgemäße Schaltungsanordnung für zwei gleichartige Gleichstromeinheiten. Die Gleichstromeinheiten sind hier zwei gleichartige Akkumulatoren (20, 30a), beispielhaft Nickel- Metall- Hydrid-Zellen mit einer Betriebsspannung zwischen 100V und 600V. Die Anschlüsse positiver Polarität beider Akkumulatoren (20, 30a) sind jeweils mit identischen steuerbaren Stromventilen (24, 34a) verbunden. Diese jeweiligen Stromrichterventile (24, 34a) sind ausgebildet als jeweils ein Transistor (26, 36), oder als Parallelschaltung einer Mehrzahl von Transistoren, und als antiparallel geschaltete Diode (28, 38), oder Mehrzahl von Dioden. Hierbei ist der jeweilige Transistor (26, 36) angeordnet mit der Durchlassrichtung vom jeweiligen Stromrichter (40, 50) zur jeweiligen Gleichstromeinheit (20, 30a). Die jeweiligen Stromventile (24, 34a) sind mit den Gleichstromanschlüssen der zugeordneten 3- Phasen-Stromrichter (40, 50) verbunden. Die Wechselstromausgänge dieser Stromrichter (40, 50) sind phasenrichtig miteinander und mit den Anschlüssen einer Drei- Phasen- Maschine (10) verbunden.

Die Stromrichter (40, 50) ihrerseits sind als Anordnung von drei Halbbrückenanordnungen von jeweils einem ersten, dem Top- Schalter (42a, 52a), und einem zweiten, dem BOT- Schalter (42b, 52b), ausgebildet. Die mit dem Anschlüssen positiver Polarität der jeweiligen Gleichstromeinheiten (20, 30a) verbundenen TOP- Schalter (42a, 52a) sind ebenso wie die mit den Anschlüssen negativer Polarität der jeweiligen Gleichstromeinheiten (20, 30a) verbundenen BOT- Schalter (42b, 52b) nach dem Stand der Technik als Parallelschaltung einer Mehrzahl von bipolaren Leistungstransistoren (44a/b, 54a/b), beispielhaft IGBTs (insulated gate bipolar transistor) mit einer Mehrzahl hierzu antiparallel geschalteter Leistungsdioden (46a/b, 56a/b) ausgebildet. Dargestellt sind hier aus Gründen der Übersichtlichkeit jeweils nur ein IGBT und eine Leistungsdiode.

Im Fahrbetrieb, wenn die 3- Phasen- Maschine (10) im Motorbetrieb alleine oder gleichzeitig mit einem Verbrennungsmotor das Fahrzeug antreibt, wird aus mindestens einem Akkumulator (20, 30a) Energie entnommen, der zugehörige Strom fließ durch die zugeordnete Diode (28, 38) des zugeordneten Stromventils (24, 34a) und speist den jeweiligen Stromrichter (40, 50), der somit hier als Wechselrichter arbeitet. Bei dieser Betriebsart, kann die Energie jeweils für einen definierten Zeitraum aus einem Akkumulator (20, 30a) entnommen werden, und den hierzu zugeordneten Teil der Schaltungsanordnung durchfließen. Alternativ können auch beide Akkumulatoren (20, 30a) quasigleichzeitig Energie liefern und über ihre zugeordneten Teile der Schaltungsanordnung den Motor (10) antreiben. Eine weitere Alternative stellt der Antrieb des Motors (10) in einem alternierenden Verfahren des Energieflusses aus den beiden Akkumulatoren (20, 30a) dar.

Im Bremsbetrieb arbeitet die 3- Phasen- Maschine (10) als Generator. Der hier erzeugte Strom fließt durch die Stromrichter (40, 50), die hierbei als Gleichrichter arbeiten. Wenn diese Ausgangsspannung des jeweiligen Stromrichters höher ist als die Spannung des zugeordneten Akkumulators (20, 30a) und wenn der Transistor (26, 36) des zugeordneten Stromventils (24, 34a) geöffnet ist fließt der Strom in den zugeordneten Akkumulator (20, 30a) und lädt diesen. Ebenso wie oben ist es auch hierbei möglich einen Akkumulator, beide Akkumulatoren alternierend oder beide Akkumulatoren gleichzeitig, falls beide die gleiche Betriebsspannung aufweisen, zu laden.

Eine weitere Betriebsaltemative besteht darin, dass die 3- Phasen- Maschine (10) im Motorbetrieb arbeitet, hierbei aus einem Akkumulator gespeist wird und der andere Akkumulator geladen wird. Diese Betriebsart ist ebenso mit der erfindungsgemäßen Schaltung möglich. Der Motor (10) wird hierbei beispielhaft aus dem ersten Akkumulator (20) gespeist, indem Strom durch die Diode (28) des Stromventils (24) fließt und den Wechselrichter (40) speist. Durch oben genannte Ausgestaltung der erfindungsgemäßen Schaltungsanordnung fließt der Strom allerdings nicht nur in den Motor (10) sondern auch in den zweiten Stromrichter (50). Somit kann nach oben beschriebenem Mechanismus der zugeordnete zweite Akkumulator (30a) geladen werden.

Fig. 2 zeigt eine zweite erfindungsgemäße Schaltungsanordnung für zwei unterschiedlich ausgestaltete Gleichstromeinheiten. Eine erste Gleichstromeinheit (20) ist wiederum als Stromquelle und Stromsenke, hier als Anordnung von Kondensatoren mit besonders hoher Kapazität, beispielhaft sog. Doppelschicht-Kondensatoren, ausgebildet. Die zweite Gleichstromeinheit (30b) ist demgegenüber ausschließlich als Stromquelle, hier beispielhaft als Brennstoffzelle ausgebildet. Hierbei weisen nun beide Gleichstromquellen unterschiedliche Eigenschaften und in der Regel auch unterschiedliche Spannungen auf. Doppelschicht-Kondensatoren (20) weisen die vorteilhafte Eigenschaft auf, dass sie vielfach schnell ent- und geladen werden können, allerdings ist ihre Kapazität in Fahrzeugen auf Grund der vertretbaren Baugröße und des entsprechenden Gewichts begrenzt. Demgegenüber weist beispielhaft die Brennstoffzelle (30b) durch ihre Speisung aus einem externen, ebenfalls im Fahrzeug befindlichen Energiespeicher eine höhere Energiekapazität auf. Nachteilig am Einsatz von Brennstoffzellen in Fahrzeugen hingegen ist, dass sie für die Speicherung von Bremsenergie nicht zur Verfügung stehen. Daher ist die vorgeschlagene Kombination aus Doppelschicht-Kondensatoren (20) und einer Brennstoffzelle (30b) eine überaus geeignet Wahl für ein Fahrzeug, da die Nachteile der jeweiligen Gleichstromeinheit durch die Vorteile der jeweils anderen kompensiert werden. Dem trägt die Ausgestaltung der erfindungsgemäßen Schaltungsanordnung Rechnung.

Diese beispielhafte Ausgestaltung der Schaltungsanordnung weist die gleichen Grundkomponenten auf wie diejenige aus Fig. 1. Allerdings ist das Stromventil (34b) zwischen der Brennstoffzelle (30b) und dem zugeordneten Stromrichter (50) ausschließlich als Diode (38) ausgebildet, da ein möglicher Stromfluss zur Brennstoffzelle (30b) aus bekannten Gründen unnötig ist.

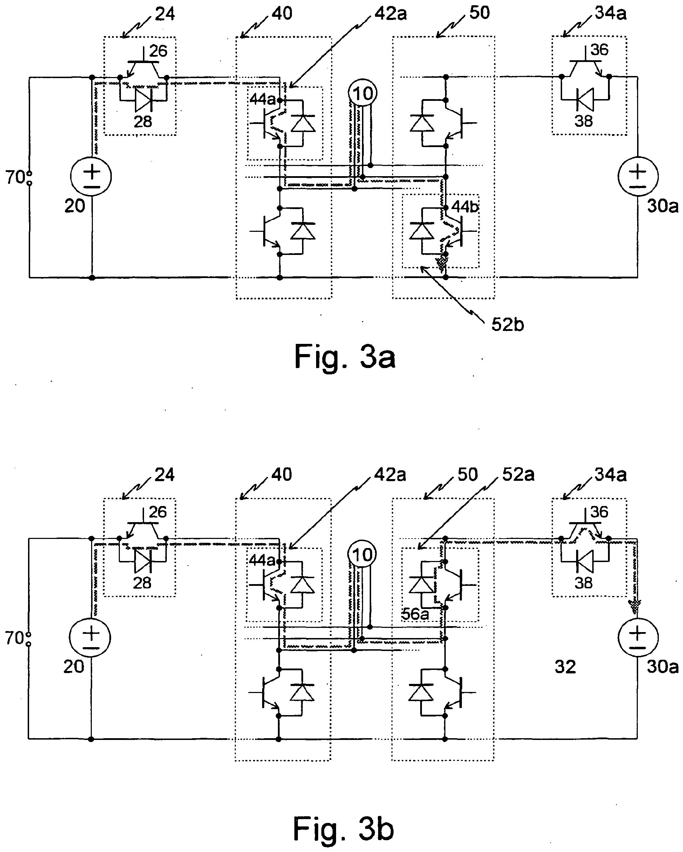

Eine sinngemäße Betriebsvariante dieser Ausgestaltung der erfindungsgemäßen Schaltungsanordnung besteht darin, ohne den Motor (10) anzutreiben, die Doppelschicht-Kondensatoren (20) durch die Brennstoffzelle (30b) zu laden. Hierbei ist eine weitere Besonderheit der erfindungsgemäßen Schaltungsanordnung besonders dienlich. Der den Doppelschicht-Kondensatoren (20) zugeordnete Stromrichter (40) kann in Kombination mit den Induktivitäten der 3- Phasen- Maschine (10) als Hochsetzsteller betrieben werden. Wenn also die Spannung der Brennstoffzelle (30b) unterhalb derjenigen der Doppelschicht-Kondensatoren (20) liegt, können diese trotzdem geladen werden, indem der Spannungswert mittels des aus mindestens einem Schalter (42a) des Stromrichters (40) und mindestens einer Wicklung, der notwendigen Induktivität, der 3- Phasen- Maschine (10) gebildeten Hochsetzstellers angehoben wird. Diese Funktion ist in identischer Weise auch bei zwei Akkumulatoren mit unterschiedlichen Spannungen nutzbar und wird detailliert bei Fig. 3 beschrieben.

Fig. 3 zeigt eine dritte erfindungsgemäße Schaltungsanordnung für zwei unterschiedlich ausgestaltete Gleichstromeinheiten. Die Grundkomponenten sind identisch mit denjenigen aus Fig. 1. Beispielhaft soll hier allerdings von zwei Akkumulatoren (20, 30a) unterschiedlicher Betriebsspannung ausgegangen werden. Ebenso wäre es hier möglich eine Gleichstromeinheit als Akkumulator und die andere als Anordnung von Doppelschicht-Kondensatoren auszubilden.

Weiterhin ist hier eine zusätzliche Energieversorgung (70) dargestellt. Im normalen Fahrbetrieb ist es nicht ausreichend die beiden Akkumulatoren aus der rückgewonnenen Bremsenergie zu laden. Daher ist hier eine Energieversorgung beispielhaft aus dem öffentlichen Versorgungsnetz mittels eines nachgeschalteten Gleichrichters unumgänglich. Alternativ kann bei einem Fahrzeug mit Hybridantrieb die zusätzliche Energieversorgung (70) auch als dem Verbrennungsmotor nachgeschalteter Generator mit diesem nachgeschalteten Gleichrichter ausgebildet sein.

Fig. 3a/b zeigen beispielhaft den Stromfluss beim Ladevorgang des zweiten Akkumulators (30a) aus dem ersten Akkumulator (20), wobei dieser eine geringere Spannung aufweist als der zweite Akkumulator (30a). Hierzu wird der TOP- Schalter (44a) des ersten Stromrichters (40) und gleichzeitig ein mit diesem TOP- Schalter (44a) über eine Wicklung der 3- Phasen- Maschine (10) verbundener und dem zweiten Stromrichter (50) der zweiten Gleichstromeinheit (30a) zugeordneter BOT- Schalter (44b) geöffnet (Fig. 3a). Somit beginn ein Stromfluss durch diese Schalter und die Wicklung der 3- Phasen-Maschine (10). Anschließend wird der BOT- Schalter (44b) im zweiten Stromrichter (50) geschlossen. Der Stromfluss bleibt aufgrund der Induktivität der Wicklung aufrechterhalten und führt somit zwangsläufig zu einem Stromfluss durch die Diode (56a) des dem BOT-Schalter zugeordneten TOP- Schalters (52a) (Fig. 3b). Der Strom fließt bei geöffnetem Stormventil (34a) in die zweite Gleichstromeinheit und lädt diese. Für diesen Ladevorgang ist es nicht notwendig, dass die 3- Phasen- Maschine im Motorbetrieb arbeitet.

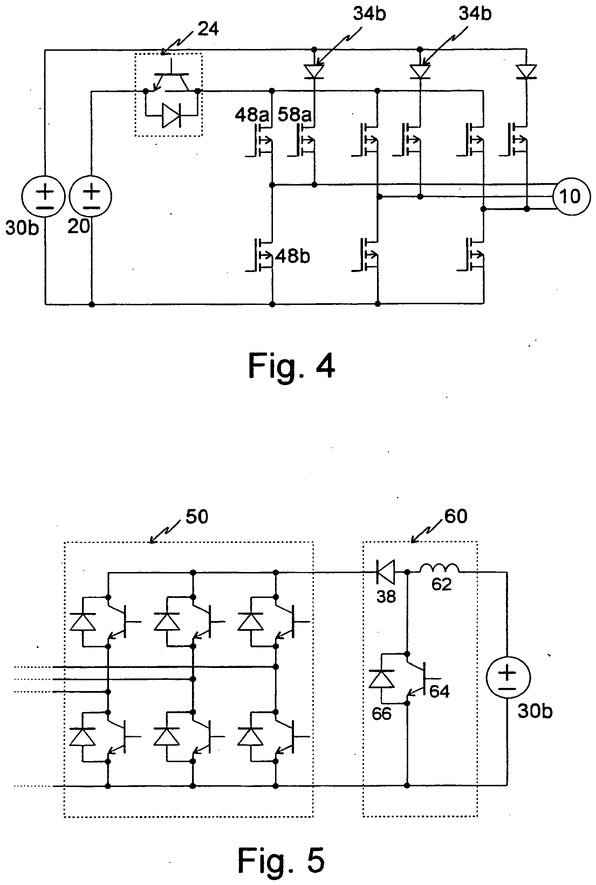

Fig. 4 zeigt eine weitere erfindungsgemäße Schaltungsanordnung. Diese Schaltungsanordnung ist besonders vorteilhaft für Fahrzeugantriebe mit 3- Phasen-Maschinen (10) kleiner Leistung. Dargestellt ist wiederum eine Gleichstromeinheit, die als Akkumulator (20) ausgebildet ist und eine zweite, die als reine Stromquelle, also beispielhaft als Brennstoffzelle (32b) mit geringer Leistungsabgabe ausgebildet ist.

Der Akkumulator (20) ist über eine steuerbares Stromrichterventil (24), wie oben beschrieben mit einem zugeordneten Stromrichter verbunden. Die Brennstoffzelle (30b) ist über drei nicht steuerbare Stromventile (34b) eines je Phase des hierzu zugeordneten Stromrichter verbunden.

In dieser Ausgestaltung sind die beiden Stromrichter allerdings nicht unabhängige Gebilde, sondern miteinander verknüpft. Die BOT- (48b) und TOP- (48a, 58a) Schalter sind hierbei als unipolare Leistungstransistoren, wie beispielhaft MOS-FETs, ausgestaltet. Jeder Stromrichter weist hierbei seinen eigenen TOP Schalter pro Phase auf. Allerdings sind die Stromrichter derart verknüpft ausgebildet, dass je Phase nur ein gemeinsamer BOT-Schalter (48b) je Phase angeordnet ist. Die oben beschriebene Funktionalität bleiben bei dieser Ausgestaltung der erfindungsgemäßen Schaltungsanordnung vollständig erhalten, wobei die Schaltung den wesentlichen Vorteil aufweist mit einer geringeren Anzahl von Leistungsschaltern ausgebildet zu sein.

Fig. 5 zeigt einen Teil einer erfindungsgemäßen Schaltungsanordnung mit einem zusätzlichen Hochsetzsteller (60). Die grundsätzliche Schaltungsanordnung entspricht derjenigen gemäß Fig. 3. Allerdings ist diese um den Hochsetzsteller (60) erweitert, der zwischen der Stromquelle (30b), beispielhaft einer Brennstoffzelle, und dem zugeordneten Stromrichter (50) angeordnet ist. Dieser Hochsetzsteller (60) umfasst eine Induktivität (62) zwischen dem Anschluss positiver Polarität der Stromquelle (30b) und dem nicht steuerbaren Stromventil, der Diode (38), sowie einen Leistungsschalter (64) mit antiparallel geschalteter Diode (66) zwischen dem Anschluss negativer Polarität der Stromquelle (30b) und dem Mittelpunkt zwischen Induktivität (62) und Stromventil (38).

Vorteilhaft an dieser Ausgestaltung der Schaltungsanordnung ist, dass hierbei eine Stromquelle (30b) mit geringer Betriebsspannung effektiv an den Motor (10) angebunden werden kann, da durch den Hochsetzsteller (60) der Spannungswert entsprechend angehoben werden kann.

## Patentansprüche

1. Schaltungsanordnung für ein Elektro- oder Hybridfahrzeug mit mindestens einer Mehr-Phasen- Maschine (10) einer ersten die Mehr- Phasen- Maschine speisenden Gleichstromeinheit (20), die als Stromquelle und Stromsenke ausgebildet ist und einer zweiten, zur ersten unterschiedlich ausgestalteten, die Mehr- Phasen- Maschine speisenden Gleichstromeinheit (30a/b), die entweder ebenfalls als Stromquelle und - senke (30a) oder ausschließlich als Stromquelle (30b) ausgebildet ist und einer Anordnung von Leistungshalbleiterbauelementen, in zwei Stromrichtern (40, 50), jeweils bestehend aus einer entsprechenden Anzahl Halbbrückenanordnungen von je zwei Halbleiterschaltern (42a/b, 52a/b bzw. 48a/b, 58a), deren jeweilige Wechselstromanschlüsse phasenrichtig miteinander und mit den Anschlüssen der Mehr-Phasen- Maschine (10) verbunden sind, wobei die Gleichstromanschlüsse zweiter Polarität der jeweiligen Stromrichters (40, 50) jeweils miteinander verbunden sind, wobei die Anschlüsse zweiter Polarität der beiden Gleichstromeinheiten (20, 30a/b) und der beiden Stromrichter (40, 50) miteinander verbunden sind, der Anschluss erster Polarität der ersten Gleichstromeinheit (20) über mindestens ein Stromventil (24) mit dem ersten Anschluss des ersten Stromrichters (40) verbunden ist und der Anschluss erster Polarität der zweiten Gleichstromeinheit (30a/b) über mindestens ein Stromventil (34a/b) mit dem ersten Anschluss des zweiten Stromrichters (50) verbunden ist.

2. Schaltungsanordnung nach Anspruch 1, wobei
die Halbleiterschalter (42a/b, 52a/b) ausgebildet sind als eine Mehrzahl von bipolaren Leistungstransistoren (44a/b, 54a/b), wie IGBTs, mit einer Mehrzahl von antiparallel geschalteten Leistungsdioden (46a/b, 56a/b) oder als eine Mehrzahl von parallel geschalteten unipolaren Leistungstransistoren (48a/b, 58a) wie MOS-FETs.

3. Schaltungsanordnung nach Anspruch 1, wobei
die erste und zweite Gleichstromeinheit (20, 30a) als Akkumulator mit einer Betriebspannung zwischen 100V und 600V ausgebildet ist und das erste und das zweite Stromventil (24, 34a) jeweils ausgebildet ist als Parallelschaltung eines Halbleiterschalters (26, 36) angeordnet mit der Durchlassrichtung vom zugeordneten Stromrichter (40, 50) zur zugeordneten Gleichstromeinheit (20, 30a) mit einer Diode (28, 38) mit Durchlassrichtung von der zugeordneten Gleichstromeinheit (20, 30a) zum zugeordneten Stromrichter (40, 50).

4. Schaltungsanordnung nach Anspruch 1, wobei
die erste Gleichstromeinheit (20) als Akkumulator mit einer Betriebsspannung zwischen 100V und 600V oder als Anordnung von Kondensatoren besonders hoher Kapazität und die zweite Gleichstromeinheit (30b) als Brennstoffzelle ausgebildet ist, das erste Stromventil (24) steuerbar ausgebildet ist als Parallelschaltung eines Halbleiterschalters (26) angeordnet mit der Durchlassrichtung vom zugeordneten Stromrichter (40) zur zugeordneten Gleichstromeinheit (20) mit einer Diode (28, 38) mit Durchlassrichtung von der zugeordneten Gleichstromeinheit (20) zum zugeordneten Stromrichter (40) und das zweite Stromventil (34b) nicht steuerbar ausgebildet ist als Diode (38) mit Durchlassrichtung von der zugeordneten Gleichstromeinheit (30b) zum zugeordneten Stromrichter (50).

5. Schaltungsanordnung nach Anspruch 1, wobei
zwischen einer Gleichstromeinheit (20, 30a/b) und dem zugeordneten Stromrichter (40, 50) einen Hochsetzsteller (60) angeordnet ist.

6. Schaltungsanordnung nach Anspruch 1, wobei
die jeweiligen BOT- Schalter (48b), die Schalter des negativen Anschlusses, der drei Halbbrückenanordnungen als gemeinsame Schalter des ersten und des zweiten Stromrichters (40, 50) ausgebildet sind.

7. Schaltungsanordnung nach Anspruch 1, wobei
an einer Gleichstromeinheit (20) ein weiterer Gleichstromanschluss (70) zur Energieversorgung vorgesehen ist, der entweder mittels eines an den Verbrennungsmotor gekoppelten Generators oder aus dem öffentlichen Versorgungsnetz, jeweils mittels nachgeschalteter Gleichrichtung versorgt wird.

8. Verfahren zur Ansteuerung einer Schaltungsanordnung nach Anspruch 1,
wobei
a) die Mehr- Phasen- Maschine im Motorbetrieb quasigleichzeitig aus beiden Gleichstromeinheiten gespeist wird, indem eine erste Gleichstromeinheit mittels eines geöffneten TOP- Schalters einer ersten Halbbrückenanordnung und eines geöffneten BOT- Schalters einer beliebigen zweiten Halbbrückenanordnung des ersten Stromrichters den Motor für ein Zeitintervall antreibt, im nächsten Zeitintervall, in dem auf Grund der Induktivität der Motorwicklungen der Freilaufstrom fließen würde ein TOP- Schalter einer ersten Halbbrückenanordnung und ein BOT- Schalter einer zweiten beliebigen Halbbrückenanordnung des zweiten Stromrichters den Motor aus der zweiten Gleichstromeinheit versorgt,
und dieses Verfahren zyklisch für alle Halbbrückenanordnungen permutiert wird, und / oder wobei
b) eine erste Gleichstromeinheit aus einer zweiten Gleichstromeinheit mit geringerer Ausgangsspannung als die erste gespeist wird indem ein, dem erster Stromrichter der ersten Gleichstromeinheit zugeordneter, TOP- Schalter und gleichzeitig ein mit diesem TOP- Schalter über eine Wicklung der Mehr- Phasen- Maschine verbundener und dem zweiten Stromrichter der zweiten Gleichstromeinheit zugeordneter BOT- Schalter geöffnet wird, hierdurch ein Stromfluss beginnt, anschließend der BOT- Schalter geschlossen wird, der Stromfluss aufgrund der Induktivität der Wicklung aufrechterhalten bleibt und zwangsläufig durch die Diode des dem BOT- Schalter zugeordneten TOP- Schalters fließt und bei geöffnetem Stormventil die zweite Gleichstromeinheit lädt.

## Claims

1. Circuit arrangement for an electric or hybrid vehicle having at least one polyphase machine (10) of a first DC unit (20) that supplies to the polyphase machine and that is in the form of a current source and current sink and a second DC unit (30a/b), of different design from the first, that supplies to the polyphase machine and that is either likewise in the form of a current source and current sink (30a) or exclusively in the form of a current source (30b), and an arrangement of power semiconductor components, in two power converters (40, 50), each consisting of a corresponding number of half-bridge arrangements of two semiconductor switches (42a/b, 52a/b and 48a/b, 58a) each, the respective AC connections of which are connected in phase to one another and to the connections of the polyphase machine (10), wherein the DC connections of second polarity of the respective power converters (40, 50) are each connected to one another, wherein the connections of second polarity of the two DC units (20, 30a/b) and of the two power converters (40, 50) are connected to one another, the connection of first polarity of the first DC unit (20) is connected to the first connection of the first power converter (40) via at least one current valve (24), and the connection of first polarity of the second DC unit (30a/b) is connected to the first connection of the second power converter (50) via at least one current valve (34a/b).

2. Circuit arrangement according to Claim 1, wherein the semiconductor switches (42a/b, 52a/b) are in the form of a plurality of bipolar power transistors (44a/b, 54a/b), such as IGBTs, having a plurality of antiparallel-connected power diodes (46a/b, 56a/b) or in the form of a plurality of parallel-connected unipolar power transistors (48a/b, 58a), such as MOSFETs.

3. Circuit arrangement according to Claim 1, wherein the first and second DC units (20, 30a) are in the form of a storage battery having an operating voltage between 100 V and 600 V, and the first and second current valves (24, 34a) are each in the form of a parallel circuit comprising a semiconductor switch (26, 36) arranged with the forward direction from the associated power converter (40, 50) to the associated DC unit (20, 30a) and a diode (28, 38) with the forward direction from the associated DC unit (20, 30a) to the associated power converter (40, 50).

4. Circuit arrangement according to Claim 1, wherein the first DC unit (20) is in the form of a storage battery having an operating voltage between 100 V and 600 V or in the form of an arrangement of capacitors of particularly high capacitance, and the second DC unit (30b) is in the form of a fuel cell, the first current valve (24) is controllably in the form of a parallel circuit comprising a semiconductor switch (26) arranged with the forward direction from the associated power converter (40) to the associated DC unit (20) and a diode (28, 38) with the forward direction from the associated DC unit (20) to the associated power converter (40), and the second current valve (34b) is non-controllably in the form of a diode (38) with the forward direction from the associated DC unit (30b) to the associated power converter (50).

5. Circuit arrangement according to Claim 1, wherein a DC unit (20, 30a/b) and the associated power converter (40, 50) have a step-up converter (60) arranged between them.

6. Circuit arrangement according to Claim 1, wherein the respective BOT switches (48b), the switches of the negative connection, of the three half-bridge arrangements are in the form of shared switches of the first and second power converters (40, 50).

7. Circuit arrangement according to Claim 1, wherein a DC unit (20) has a further DC connection (70) for supplying power provided on it that is supplied with power either by means of a generator coupled to the internal combustion engine or from the public power supply system, in each case by means of downstream rectification.

8. Method for actuating a circuit arrangement according to Claim 1, wherein
a) the polyphase machine is provided with a supply from both DC units virtually at the same time during motor operation by virtue of a first DC unit using an open TOP switch of a first half-bridge arrangement and an open BOT switch of an arbitrary second half-bridge arrangement of the first power converter to drive the motor for one time interval, a TOP switch of a first half-bridge arrangement and a BOT switch of a second arbitrary half-bridge arrangement of the second power converter supplying to the motor from the second DC unit in the next time interval, in which the freewheeling current would flow on account of the inductance of the motor windings,
and this method being cyclically permuted for all the half-bridge arrangements, and/or wherein
b) a first DC unit has a supply provided from a second DC unit having a lower output voltage than the first by virtue of a TOP switch, associated with the first power converter of the first DC unit, and at the same time a BOT switch, which is connected to this TOP switch via a winding of the polyphase machine and is associated with the second power converter of the second DC unit, being opened, this prompting a flow of current to begin, the BOT switch subsequently being closed, the flow of current being maintained on account of the inductance of the winding and imperatively flowing through the diode of the TOP switch associated with the BOT switch, and charging the second DC unit when the current valve is open.

## Revendications

1. Arrangement de circuit pour un véhicule électrique ou hybride comprenant au moins une machine multiphasée (10), une première unité à courant continu (20) alimentant la machine multiphasée, laquelle est réalisée sous la forme d'une source de courant et d'un récepteur de courant, et une deuxième unité à courant continu (30a/b) alimentant la machine multiphasée, configurée différemment de la première, laquelle est elle aussi réalisée sous la forme d'une source et d'un récepteur de courant (30a) ou exclusivement sous la forme d'une source de courant (30b), et un arrangement de composants semiconducteurs de puissance, dans deux convertisseurs de courant (40, 50), composés respectivement d'un nombre correspondant d'arrangements en demi-pont de deux commutateurs à semiconducteur (42a/b, 52a/b ou 48a/b, 58a) chacun, dont les bornes de courant alternatif respectives sont reliées en concordance de phase entre elles et avec les bornes de la machine multiphasée (10), les bornes de courant continu de deuxième polarité de convertisseur de courant (40, 50) respective étant respectivement reliées l'une à l'autre, les bornes de deuxième polarité des deux unités à courant continu (20, 30a/b) et des deux convertisseurs de courant (40, 50) étant respectivement reliées l'une à l'autre, la borne de première polarité de la première unité à courant continu (20) étant reliée par le biais d'au moins une vanne à courant (24) à la première borne du premier convertisseur de courant (40) et la borne de première polarité de la deuxième unité à courant continu (30a/b) étant reliée par le biais d'au moins une vanne à courant (34a/b) à la première borne du deuxième convertisseur de courant (50).

2. Arrangement de circuit selon la revendication 1, les commutateurs à semiconducteur (42a/b, 52a/b) étant configurés sous la forme d'une pluralité de transistors de puissance bipolaires (44a/b, 54a/b), tels que des IGBT, avec une pluralité de diodes de puissance (46a/b, 56a/b) branchées en tête-bêche ou sous la forme d'une pluralité de transistors de puissance unipolaires (48a/b, 58a), tels que des MOS-FET, branchés en parallèle.

3. Arrangement de circuit selon la revendication 1, la première et la deuxième unité à courant continu (20, 30a) étant réalisées sous la forme d'un accumulateur avec une tension de service entre 100 V et 600 V et la première et la deuxième vanne à courant (24, 34a) étant respectivement réalisées sous la forme d'un circuit parallèle d'un commutateur à semiconducteur (26, 36), disposé avec le sens passant du convertisseur de courant (40, 50) associé vers l'unité à courant continu (20, 30a) associée, et d'une diode (28, 38), avec le sens passant de l'unité à courant continu (20, 30a) associée vers le convertisseur de courant (40, 50) associé.

4. Arrangement de circuit selon la revendication 1, la première unité à courant continu (20) étant réalisée sous la forme d'un accumulateur avec une tension de service entre 100 V et 600 V ou sous la forme d'un arrangement de condensateurs, notamment de forte capacité, et la deuxième unité à courant continu (30b) sous la forme d'une pile à combustible, la première vanne à courant (24) étant réalisée commandable sous la forme d'un circuit parallèle d'un commutateur à semiconducteur (26), disposé avec le sens passant du convertisseur de courant (40) associé vers l'unité à courant continu (20) associée, et d'une diode (28, 38), avec le sens passant de l'unité à courant continu (20) associée vers le convertisseur de courant (40) associé, et la deuxième vanne à courant (34b) étant réalisée non commandable sous la firme d'une diode (38), avec le sens passant de l'unité à courant continu (30b) associée vers le convertisseur de courant (50) associé.

5. Arrangement de circuit selon la revendication 1, un convertisseur élévateur (60) étant disposé entre une unité à courant continu (20, 30a/b) et le convertisseur de courant (40, 50) associé.

6. Arrangement de circuit selon la revendication 1, le commutateur BOT (48b) correspondant, le commutateur de la borne négative, les trois arrangements en demi-pont étant réalisés sous la forme d'un commutateur commun du premier et du deuxième convertisseur de courant (40, 50).

7. Arrangement de circuit selon la revendication 1, une borne de courant continu (70) supplémentaire étant prévue sur l'unité à courant continu (20) pour l'alimentation en énergie, laquelle est alimentée soit au moyen d'un générateur accouplé au moteur à combustion interne, soit depuis le réseau de distribution public, respectivement au moyen d'un redressement branché en aval.

8. Procédé de commande d'un arrangement de circuit selon la revendication 1,
a) la machine multiphasée en régime moteur étant alimentée quasi-simultanément depuis les deux unités à courant continu, en ce qu'une première unité à courant continu actionne le moteur pendant un intervalle de temps donné au moyen d'un commutateur TOP ouvert d'un premier arrangement en demi-pont et au moyen d'un commutateur BOT ouvert d'un deuxième arrangement en demi-pont quelconque du premier convertisseur de courant, et dans l'intervalle de temps suivant, dans lequel le courant de roue libre circulerait en raison de l'inductance des enroulements du moteur, un commutateur TOP d'un premier arrangement en demi-pont et un commutateur BOT d'un deuxième arrangement en demi-pont quelconque du deuxième convertisseur de courant alimentent le moteur depuis la deuxième unité à courant continu,
et ce procédé étant permuté cycliquement pour tous les arrangements en demi-pont
et/ou
b) une première unité à courant continu étant alimentée depuis une deuxième unité à courant continu ayant une tension de sortie inférieure à la première en ce qu'un commutateur TOP, associé au premier convertisseur de courant de la première unité à courant continu, et simultanément un commutateur BOT, relié à ce commutateur TOP par le biais d'un enroulement de la machine multiphasée et associé au deuxième convertisseur de courant de la deuxième unité à courant continu, est ouvert, ce qui provoque le début d'un flux de courant, le commutateur BOT est ensuite fermé, le flux de courant est maintenu du fait de l'inductance de l'enroulement et circule de manière forcée à travers la diode du commutateur TOP associé au commutateur BOT et charge la deuxième unité à courant continu lorsque la vanne à courant est ouverte.
